# EUROPÄISCHE PATENTSCHRIFT

(11) **EP 3 269 017 B1**
(45) Veröffentlichungstag und Bekanntmachung des Hinweises auf die Patenterteilung: **22.08.2018**
(21) Anmeldenummer: 17713243.8
(22) Anmeldetag: 23.03.2017
(51) Int. Cl.: H02J 3/38, H02H 3/16

(54) **SOLARMODUL, BETRIEBSVERFAHREN FÜR EIN SOLARMODUL UND PHOTOVOLTAIKANLAGE**
SOLAR MODULE, OPERATING METHOD FOR A SOLAR MODULE, AND PHOTOVOLTAIC SYSTEM
MODULE SOLAIRE, SON PROCÉDÉ DE FONCTIONNEMENT ET SYSTÈME PHOTOVOLTAÏQUE

(30) Priorität: 31.03.2016 DE 102016105930
(43) Veröffentlichungstag der Anmeldung: 17.01.2018
(73) Patentinhaber: SMA Solar Technology AG, 34266 Niestetal (DE)
(72) Erfinder: FALK, Andreas, 34131 Kassel (DE)
(86) Internationale Anmeldenummer: PCT/EP2017/056919
(87) Internationale Veröffentlichungsnummer: WO 2017/167635

(56) Entgegenhaltungen:
- EP-A2- 2 355 170

## Beschreibung

Die Erfindung betrifft ein Solarmodul, ein Betriebsverfahren für ein Solarmodul sowie eine Photovoltaikanlage (PV-Anlage) mit einer Reihenschaltung von Solarmodulen.

Zur kostengünstigen Erzeugung von elektrischer Energie mit Hilfe von PV-Modulen werden diese PV-Module zu Strings immer größerer Länge verbunden. Um die mit der anwachsenden Stringlänge steigende Spannung des Strings beherrschbar zu machen, sind Sicherheitsschaltungen erforderlich. So ist es beispielsweise üblich und in der Schrift EP2296244 A1 beschrieben, lange Strings bevorzugt in der Stringmitte mit Erdpotential zu verbinden und den über die Erdverbindung fließenden Strom als Fehlerstrom zu überwachen. Übersteigt der Strom einen Grenzwert, ist von einem Erdfehler auszugehen, und die Anlage wird in einen sicheren Zustand versetzt, beispielsweise durch Auftrennen der PV-Module untereinander und/oder durch Abtrennen des Strings vom angeschlossenen Wechselrichter. Ein Abtrennen des Strings vom Wechselrichter kann hierbei ebenfalls durch ein Überschreiten eines Grenzwertes durch die gesamte Stringspannung ausgelöst werden, um den Wechselrichter vor einer Beschädigung zu schützen.

Alternativ zu einem Abtrennen des Strings vom Wechselrichter wird in der Schrift DE102010009120 A1 vorgeschlagen, einen Teil des Strings über einen Schalter kurzzuschließen, wenn die Stringspannung einen kritischen Wert überschreitet. Hierdurch kann der verbleibende String weiterhin mit dem Wechselrichter verbunden bleiben und die Photovoltaikanlage Energie produzieren. Durch diese Lösung wird allerdings ein erhöhter Installationsaufwand durch die Bereitstellung des zusätzlichen Kurzschlusspfades und dessen Ansteuerung verursacht.

Im Dokument EP 2 355 170 A2 wird eine Photovoltaikanlage beschrieben, die eine Steuereinrichtung aufweist, die in Abhängigkeit der Ausgangsspannung von Module der Anlage die Verbindung zwischen den Modulen und einem Wechselrichter der Anlage so steuert, dass ein vorgegebener Spannungsbereich am Wechselrichtereingang möglichst eingehalten wird.

Es ist daher Aufgabe dieser Erfindung, Solarmodule für Strings bereitzustellen, die mit Hilfe einer Schutzschaltung autonom die Einhaltung einer maximalen Spannung eines beliebigen Teils des Solarmoduls gegenüber Erdpotential sicherstellen, auch Common Mode (CM-) Spannung genannt, ohne dass ein zusätzlicher Verkabelungsaufwand des Strings erforderlich ist. Weiterhin wünschenswert ist es, dass das Solarmodul autonom auch die Einhaltung einer maximalen Gesamtspannung in einem String von Solarmodulen sicherstellt, auch Differential Mode (DM-) Spannung genannt.

Diese Aufgabe wird gelöst durch ein Solarmodul des unabhängigen Vorrichtungsanspruchs 1, durch eine Photovoltaikanlage des nebengeordneten Anspruchs 9, beziehungsweise durch das Betriebsverfahren des Anspruchs 10. Bevorzugte Ausführungsformen sind in den abhängigen Ansprüchen beschrieben.

In einem erfindungsgemäßen Aspekt sind ein Kurzschlussschalter und eine Steuereinheit jeweils zumindest einem Teil eines Solarmoduls parallel geschaltet, wobei das Solarmodul die Steuereinheit elektrisch versorgt und über einen ersten und einen zweiten Modulanschluss mit weiteren Solarmodulen zu einem String verbindbar ist. Die Steuereinheit ist zum Betätigen des Kurzschlussschalters in Abhängigkeit einer zwischen einem Erdpotentialbezugsanschluss des Solarmoduls und einem der Modulanschlüsse abfallenden Spannung, der sog. Isolationsspannung eingerichtet. Hierbei können der Kurzschlussschalter und die Steuereinheit dem gleichen Teil des Solarmoduls, insbesondere auch dem gesamten Solarmodul, oder unterschiedlichen, auch überlappenden, insbesondere aber auch komplementären Teilen des Solarmoduls parallel geschaltet sein.

In einer vorteilhaften Ausführung ist die Steuereinheit weiterhin zum Betätigen des Kurzschlussschalters in Abhängigkeit einer über die Modulanschlüsse abfallenden Modulspannung eingerichtet. Vom Begriff Modulspannung mit umfasst sind Spannungen, die über einem Teil des Solarmoduls abfallen und gemessen werden, und die daher repräsentativ für die über die Modulanschlüsse abfallende Spannung ist.

In einer bevorzugten Ausführung umfasst das Solarmodul eine Reihenschaltung eines ersten Teilmoduls und eines zweiten Teilmoduls, wobei dem zweiten Teilmodul der Kurzschlussschalter und dem ersten Teilmodul die Steuereinheit parallel geschaltet ist. In dieser Konfiguration wird die Steuereinheit permanent von dem ersten Teilmodul elektrisch versorgt und kann an diesem die Modulspannung permanent messen. Im Bedarfsfall kann das zweite Teilmodul von der Steuereinheit kurzgeschlossen werden, so dass zwischen den Modulanschlüssen nur noch die Spannung des ersten Teilmoduls anliegt und die Messung der Modulspannung vom Kurzschließen des zweiten Teilmoduls nicht beeinflusst ist.

Um die Spannung zwischen den Modulanschlüssen weiter zu reduzieren, kann dem ersten Teilmodul ein zusätzlicher, von der Steuereinheit angesteuerter Kurzschlussschalter parallel geschaltet sein. Hierdurch kann im Bedarfsfall das gesamte Solarmodul über den Kurzschlussschalter des zweiten Teilmoduls und den zusätzlichen Kurzschlussschalter des ersten Teilmoduls kurzgeschlossen werden. Ein in die Steuereinheit integrierter Pufferspeicher kann die elektrische Versorgung der Steuereinheit während der Phase sicherstellen, in der der zusätzliche Kurzschlussschalter geschlossen ist und daher dem ersten Teilmodul keine Energie entnommen werden kann. Der Pufferspeicher kann hierbei durch wiederholtes kurzes Öffnen oder teilweises Öffnen im Linearbetrieb des zusätzlichen Kurzschlussschalters nachgeladen werden.

Innerhalb des Strings kann das erfindungsgemäße Solarmodul eigenständig erkennen, wenn eine Betriebssituation erreicht wird, in der an dem String anliegende Spannungswerte, insbesondere Isolationsspannungen gegenüber Erdpotential, außerhalb eines zulässigen Bereiches liegen können. In einem solchen Fall kann das erfindungsgemäße Solarmodul die an ihm abfallende Spannung eigenständig reduzieren, so dass die Spannungswerte wieder in einen zulässigen Bereich zurückgeführt werden beziehungsweise den zulässigen Bereich erst gar nicht verlassen. Auf diese Weise ist es möglich, Solarmodule zu einem längeren String zu verschalten als es mit konventionellen Solarmodul möglich wäre, ohne dass die Gefahr einer Verletzung von Spannungsvorgaben, insbesondere Vorgaben für einzuhaltende Isolationsspannungen, besteht.

Weiterhin ist es möglich, auch im Falle eines Erdungsfehlers die Einhaltung von Vorgaben für Isolationsspannungen innerhalb des Strings mit einer größeren Zahl reihenverschalteter Solarmodulen zu erfüllen, als es mit konventionellen Solarmodul möglich wäre, da die erfindungsgemäßen Solarmodule auch im Falle einer Potentialverschiebung aufgrund eines Erdungsfehlers reagieren und ihre Spannung eigenständig reduzieren. Aufgrund der autonomen Reaktion der erfindungsgemäßen Solarmodule auf solche Betriebssituationen kann die Einhaltung der Spannungsvorgaben selbst dann sichergestellt werden, wenn ein einzelnes Solarmodul aufgrund eines Fehlers nicht in der Lage ist, seine Teilmodule kurzzuschließen. Insbesondere wenn eine Vielzahl von Strings parallel verschaltet ist, wirken Strings, die eigenständig ihre Spannung reduziert haben für andere Strings, die aufgrund eines Fehlers ihre Spannung nicht reduziert haben, wie Verbraucher und reduzieren so die Gesamtspannung des Solarfeldes. Dadurch ist das System sehr robust, weil das Versagen einzelner Teilschaltungen nicht zum Versagen des Systems führt.

Da die erfindungsgemäßen Solarmodule Betriebssituationen eigenständig erkennen, in denen eine Reduktion der Stringspannung erforderlich ist, ist keine Kommunikation zwischen den Solarmodulen oder zwischen einem Solarmodul und einer zentralen Kommunikationseinheit erforderlich. Selbstverständlich ist nicht ausgeschlossen, die Möglichkeit einer solchen Kommunikation vorzusehen, insbesondere um die Reduktion der Spannung auch auf diese Weise herbeiführen zu können oder das Auslösen der Schutzvorrichtung zu kommunizieren.

In einer Ausführung besteht die Reihenschaltung des Solarmoduls ausschließlich aus dem ersten und zweiten Teilmodul. In einer alternativen Ausführung weist die Reihenschaltung mindestens ein weiteres Teilmodul auf, dem ein weiterer Kurzschlussschalter parallel geschaltet ist, wobei die Steuereinheit zum Betätigen des weiteren Kurzschlussschalters in Abhängigkeit der Modulspannung und/oder der Isolationsspannung eingerichtet ist. Auf diese Weise kann die Steuereinheit ausgewählte oder alle Teilmodule über die ihnen zugeordneten Kurzschlussschalter selektiv kurzschließen und so die Spannung des Solarmoduls bedarfsgerecht reduzieren. Beispielsweise können in der Steuereinheit unterschiedliche Grenzwerte für das Schließen des Kurzschlussschalters und des weiteren Kurzschlussschalters hinterlegt sein, so dass der Kurzschlussschalter und der weitere Kurzschlussschalter zu unterschiedlichen Zeitpunkten beziehungsweise unter unterschiedlichen Spannungsbedingungen betätigt werden und so eine schrittweise Herabsetzung der Spannung des Solarmoduls ermöglichen. Insbesondere kann die Steuereinheit dazu eingerichtet sein, den weiteren Kurzschlussschalter immer auch zu schließen, wenn sie den Kurzschlussschalter schließt. Selbstverständlich ist es aber auch denkbar, dass die Steuereinheit alle Kurzschlussschalter des Solarmoduls mit einem gemeinsamen Schaltsignal betätigt. Es kann sinnvoll sein, dass der weitere Kurzschlussschalter nur in Abhängigkeit der Isolationsspannung und/oder der Kurzschlussschalter nur in Abhängigkeit der Modulspannung gesteuert wird.

In einer vorteilhaften Ausführungsform ist in der Steuereinheit ein erster Grenzwert hinterlegt, wobei die Steuereinheit zum Schließen des weiteren Kurzschlussschalters eingerichtet ist, wenn die Isolationsspannung den ersten Grenzwert übersteigt. Auf diese Weise wird in dem Betriebsfall die Spannung des Solarmoduls reduziert, in dem das Solarmodul oder andere Teile des Strings eine derart hohe Spannung gegenüber Erdpotential aufweisen, so dass die Isolation des betroffenen Solarmoduls beschädigt werden kann.

Zusätzlich oder alternativ kann in der Steuereinheit ein zweiter Grenzwert hinterlegt sein, wobei die Steuereinheit zum Schließen des Kurzschlussschalters eingerichtet ist, wenn die Modulspannung den zweiten Grenzwert übersteigt. Die Modulspannung kann als repräsentativ für die Stringspannung betrachtet werden, weswegen der erste Grenzwert bevorzugt so gewählt wird, dass der Kurzschlussschalter bei Gefahr einer zu hohen Stringspannung geschlossen wird, beispielsweise bei hoher Einstrahlung, tiefer Temperatur oder in einem abgeregelten Zustand einer den String umfassenden Energieerzeugungsanlage. Vorteilhafterweise ist die Modulspannung, die über dem ersten Teilmodul abfallende Spannung, so dass die Modulspannung nicht davon abhängt, ob Kurzschlussschalter des Solarmoduls geschlossen sind. Es ist aber nicht ausgeschlossen, die Modulspannung als die über mehrere Teilmodule oder das gesamte Solarmodul abfallende Spannung zu bestimmen.

Der erste und/oder der zweite Grenzwert können als Festwert in der Steuereinheit hinterlegt sein, oder die Steuereinheit ist zur Anpassung eines der Grenzwerte in Abhängigkeit des anderen Grenzwerts eingerichtet. Im letzteren Fall kann insbesondere auch bei gleichzeitigem Vorliegen einer hohen Stringspannung und eines Erdungsfehlers eine die erfindungsgemäßen Solarmodule umfassende Energieerzeugungsanlage sicher und ohne Gefahr einer Beschädigung betrieben werden.

In einem weiteren Aspekt der Erfindung umfasst eine Photovoltaikanlage eine Reihenschaltung von vorstehend als erfindungsgemäß beschriebenen Solarmodulen. Die Reihenschaltung der Solarmodule kann einen String der Photovoltaikanlage bilden. Hierbei ist es sowohl denkbar, dass alle Solarmodule eines Strings erfindungsgemäße Solarmodule sind, als auch dass eine beliebige Zusammenstellung von erfindungsgemäßen und konventionellen Solarmodulen den String bilden. Bevorzugt werden im letzteren Fall die erfindungsgemäßen Solarmodule am Rand des Strings platziert, während die Mitte des Strings von konventionellen Solarmodulen gebildet wird. Diese Anordnung trägt der Tatsache Rechnung, dass im Fall eines Erdungsfehlers in erster Linie die äußersten Solarmodule eines Strings vorgegebene Spannungsgrenzen gegenüber Erdpotential verletzen. Die Anordnung der erfindungsgemäßen Solarmodule in diesem Bereich des Strings führen dazu, dass die Stringspannung in einem solchen Fall effektiv herabgesetzt wird.

Durch die Verwendung erfindungsgemäßer Solarmodule ist es möglich, eine Photovoltaikanlage mit einem String auszustatten, der aufgrund seiner Länge eine Leerlaufspannung aufweist, die größer als die maximal zulässige Eingangsspannung eines Wechselrichters der Photovoltaikanlage ist, ohne dass es erforderlich ist, den Wechselrichter vom String mittels eines Trennschalters zu trennen, wenn keine ausreichende Leistungsentnahme aus dem String erfolgt. Im Fall einer unzureichenden Leistungsentnahme steigt die Stringspannung zwar an, kann aber durch geeignete Wahl des in den Steuereinheiten hinterlegten zweiten Grenzwerts so weit reduziert werden, dass er unter der maximal zulässigen Eingangsspannung des Wechselrichters verbleibt. So ist es sogar denkbar, die Trennschalter zwischen dem String und dem Wechselrichter entfallen zu lassen.

In einem weiteren Aspekt der Erfindung umfasst ein Betriebsverfahren für ein Solarmodul mit zwei Modulanschlüssen, über die das Solarmodul mit weiteren Solarmodulen zu einem String verbindbar ist, und einem Erdpotentialbezugsanschluss ein Messen einer Isolationsspannung zwischen dem Erdpotentialbezugsanschluss des Solarmoduls und einem der Modulanschlüsse mittels einer Steuereinheit und ein Kurzschließen zumindest eines Teiles des Solarmoduls mittels der Steuereinheit in Abhängigkeit von der Isolationsspannung. Die Steuereinheit wird hierbei durch das Solarmodul elektrisch versorgt.

Vorteilhafterweise umfasst das Betriebsverfahren weiterhin ein Messen einer Modulspannung zwischen den Modulanschlüsse mittels der Steuereinheit und ein Kurzschließen zumindest eines Teiles des Solarmoduls mittels der Steuereinheit in Abhängigkeit von der Modulspannung.

Bevorzugt ist die Steuereinheit zur Unterscheidung zwischen mindestens drei Bedingungen in Abhängigkeit der Isolationsspannung und der Modulspannung eingerichtet, wobei in einer ersten Bedingung kein Kurzschließen des Solarmoduls, in einer zweiten Bedingung das Kurzschließen eines Teils des Solarmoduls und in einer dritten Bedingung das Kurzschließen des gesamten Solarmoduls erfolgt. Auf diese Weise kann die Steuereinheit die Spannung zwischen den Modulanschlüssen des Solarmoduls bedarfsgerecht so weit wie nötig reduzieren.

Aus Gründen der einfachen Konfiguration ist es wünschenswert, die erfindungsgemäßen Solarmodule eines Strings mit identisch konfigurierten Steuereinheiten auszustatten. Hierdurch würden alle Steuereinheiten des Strings unter den gleichen lokalen Bedingungen die Spannung des entsprechenden Solarmoduls reduzieren. Zur Optimierung der Sicherungsfunktion gegen Überspannung wäre es allerdings vorteilhaft, die Konfiguration der Steuereinheiten, insbesondere die Festlegung des ersten und zweiten Grenzwerts, von der Lage des Solarmoduls innerhalb des Strings abhängig zu machen. Um beide Ziele erfüllen zu können, ist es vorteilhaft, die Solarmodule zu befähigen, ihre Lage innerhalb eines Strings eigenständig zu bestimmen und ihre Konfiguration, insbesondere den ersten und zweiten Grenzwert, in Abhängigkeit der bestimmten Lage zu wählen. Hierzu werden die Solarmodule nach Installation zunächst in einer Einstellphase betrieben, in der sie lediglich wiederholt Wertepaare der Isolationsspannung und der Modulspannung während des Betriebs des Solarmoduls erfassen und zur Bestimmung von Korrelationen zwischen diesen Spannungswerten nutzen. An diesen Wertepaaren bestimmbare Korrelationen sind Funktion der Lage des Solarmoduls im String. So ist zu erwarten, dass beispielsweise Solarmodule am äußeren Ende eines Strings erheblich höhere Beträge der Isolationsspannung bei einer vergleichbaren Modulspannung aufweisen als Solarmodule in der Mitte des Strings. Nach Abschluss der Einstellphase können Werte für den ersten und zweiten Grenzwert in Abhängigkeit der bestimmten Korrelationen gewählt werden. Bevorzugt wird ein Kurzschließen von Teilmodulen der erfindungsgemäßen Solarmodule durch deren Steuereinheiten während der Einstellphase vermieden oder zumindest auf sicherheitskritische Betriebsfälle beschränkt und erst danach unter Verwendung der bestimmten individuellen Grenzwerte aktiviert. Die Einstellphase sollte eine Dauer aufweisen, die sicherstellt, dass eine ausreichende Bandbreite von Betriebszuständen abgedeckt wird, beispielsweise einen oder wenige Monate.

Im Folgenden wird die Erfindung mithilfe von Figuren dargestellt, von denen
- Fig. 1: eine erste erfindungsgemäße Ausführung eines Solarmoduls,
- Fig. 2: eine weitere erfindungsgemäße Ausführung eines Solarmoduls,
- Fig. 3: eine Photovoltaikanlage mit einer Reihenschaltung von erfindungsgemäßen Solarmodulen,
- Fig. 4: Spannungsverläufe entlang einer Reihenschaltung von erfindungsgemäßen Solarmodulen und
- Fig. 5: eine Aufzeichnung von Spannungs-Wertepaaren zur Veranschaulichung eines Bestimmungsverfahrens für Grenzwerte zur Steuerung der erfindungsgemäßen Solarmodule zeigt.

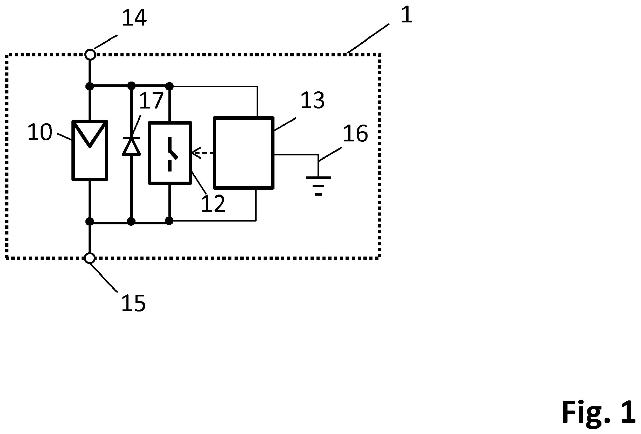

Fig. 1 zeigt ein erfindungsgemäßes Solarmodul 1 mit einem ersten Modulanschluss 14 und einem zweiten Modulanschluss 15. Zwischen den Modulanschlüssen 14, 15 ist ein einzelnes photovoltaisches Modul 10 angeordnet, das Sonnenlicht in elektrische Gleichstromleistung umwandelt. Dem photovoltaischen Modul 10 ist eine Diode 17 als Bypass-Diode und eine Steuereinheit 13 parallel geschaltet, so dass die Steuereinheit durch das photovoltaische Modul 10 im Betrieb elektrisch versorgt wird. Gleichzeitig ist der Diode 17, sowie der Steuereinheit 13 zusätzlich ein Kurzschlussschalter 12 parallel geschaltet, der durch die Steuereinheit 13 betrieben wird. Die Steuereinheit 13 kann den Kurzschlussschalter 12 zumindest dann öffnen, wenn ein in die Steuereinheit 13 integrierter Pufferspeicher, beispielsweise ein Kondensator, soweit entladen ist, dass ein Nachladen über das photovoltaische Modul 10 erforderlich wird. Hierbei ist es alternativ zum vollständigen Öffnen denkbar, dass der Kurzschlussschalter 12 in einem teilleitenden Betrieb nur so weit geöffnet wird, dass der Kondensator nachgeladen werden kann. Insbesondere bei Betriebszuständen, bei denen eine möglichst geringe Spannung zwischen den Modulanschlüssen 14, 15 gewünscht ist, schließt die Steuereinheit 13 den Kurzschlussschalter 12 während der Zeit, in der die Steuereinheit 13 seine Energie zum Betrieb dem Pufferspeicher entnehmen kann, so dass das photovoltaische Modul 10 in dieser Zeit kurzgeschlossen ist und im Wesentlichen keine Spannung zwischen den Modulanschlüssen 14 und 15 anliegt. Wenn kein solcher Betriebszustand vorliegt, kann der Kurzschlussschalter 12 natürlich auch dauerhaft geöffnet sein.

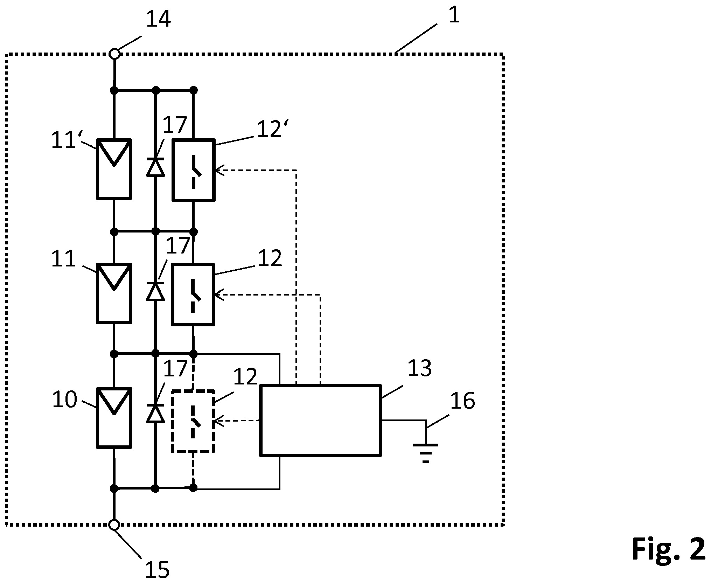

Fig. 2 zeigt in einer weiteren Ausführungsform der Erfindung ein Solarmodul 1. Zwischen den Modulanschlüssen 14 und 15 ist eine Reihenschaltung von mehreren Teilmodulen 10, 11, 11' angeordnet. Einem erstem Teilmodul 10 ist eine Diode 17 als Bypass-Diode und eine Steuereinheit 13 parallel geschaltet, so dass die Steuereinheit durch das erste Teilmodul 10 im Betrieb elektrisch versorgt wird. Den beiden weiteren Teilmodulen 11, 11' sind jeweils eine Bypass-Diode 17 und ein Kurzschlussschalter 12, 12' parallel geschaltet. Die Kurzschlussschalter 17 werden hierbei durch die Steuereinheit 13 in Abhängigkeit von Spannungen angesteuert, die die Steuereinheit 13 durch einen Erdpotentialbezugsanschluss 16, sowie über die Anschlüsse zum ersten Teilmodul 10 bestimmt.

Die Teilmodule 10, 11, 11' können durch separate photovoltaische Module, aber auch durch eine Anzahl Solarzellen innerhalb eines PV-Panels gebildet werden. In einer vorteilhaften Ausführungsform wird das Solarmodul durch ein PV-Panel gebildet, so dass die Steuereinheit 13 und die Kurzschlussschalter 12 in das PV-Modul integriert sind. Der Erdpotentialbezugsanschluss 16 kann bevorzugt mit einem Rahmen des PV-Panels verbunden sein, kann aber zum Beispiel bei rahmenlosen PV-Panelen auch als Kontaktfläche im Außenbereich des PV-Panels ausgebildet sein, vor der ein Verbindungspfad zum Erdpotenzial geeignet hergestellt ist. Der Rahmen beziehungsweise die Kontaktfläche sind dann weiter mit hinreichend niedriger Impedanz, also mit geringerer Impedanz im Vergleich zur Impedanz der Spannungsbestimmung in der Steuereinheit 13, mit dem Erdpotential verbunden.

Die Steuereinheit 13 bestimmt beispielsweise eine Modulspannung des Teilmoduls 10 und eine Isolationsspannung zwischen dem Modulanschluss 15 und dem Erdpotentialbezugsanschluss 16. Die Steuereinheit 13 vergleicht die Modulspannung und die Isolationsspannung mit vorgegebenen Grenzwerten und schließt keinen, einen, mehrere oder alle Kurzschlussschalter 12 in Abhängigkeit eines Ergebnisses des Vergleichs. Beispielsweise werden Kurzschlussschalter 12 geschlossen, wenn die Isolationsspannung einen ersten Grenzwert übersteigt und wieder geöffnet, wenn die Isolationsspannung unter diesen Grenzwert gefallen ist.

Die Anzahl der weiteren Teilmodule 11 mit parallelem Kurzschlussschalter 12 kann eins oder auch eine Zahl größer eins sein, wobei die Kurzschlussschalter 12 gemeinsam oder individuell durch die Steuereinheit 13 angesteuert werden können. Bevorzugt wird das erste Teilmodul 10 so ausgelegt, dass dessen Spannung möglichst niedrig, aber ausreichend zur elektrischen Versorgung der Steuereinheit 13 ist, so dass die gesamte Spannung des Solarmoduls 1 über einen möglichst großen Bereich variierbar ist. Weiterhin bevorzugt ist es, die Modulspannung nur über Teilmodule zu bestimmen, die nicht über Kurzschlussschalter kurzgeschlossen werden, so dass das Betätigen eines Kurzschlussschalters 12 keinen maßgeblichen Einfluss auf die gemessene Modulspannung ausübt. Alternativ ist es aber auch möglich, diesen Einfluss rechnerisch oder auf anderem Wege auszugleichen beziehungsweise den Kurzschluss zu Messzwecken wiederholt temporär aufzuheben. In diesem Fall bleibt die Spannungsbegrenzung für die Reihenschaltung einer Vielzahl von Solarmodulen innerhalb eines Solarfelds erhalten, wenn die Spannungsmessung stochastisch versetzt erfolgt und die Messdauer ausreichend kurz ist.

Es ist ebenfalls denkbar, dass auch die Steuereinheit 13 mit einem optionalen parallelen Kurzschlussschalter 12 ausgestattet ist, der von der Steuereinheit 13 angesteuert werden kann. Analog zu der in Zusammenhang mit Fig. 1 beschriebenen Vorgehensweise kann die Steuereinheit 13 den ihr parallelen Kurzschlussschalter 12 zumindest immer dann kurzzeitig öffnen, wenn ein Nachladen eines in die Steuereinheit 13 integrierten Pufferspeicher zur Aufrechterhaltung des Betriebs der Steuereinheit 13 erforderlich ist. Die Messung der Spannung des Teilmoduls 10 findet in diesem Fall statt, während der der Steuereinheit parallelgeschaltete Kurzschlussschalter 12 geöffnet ist.

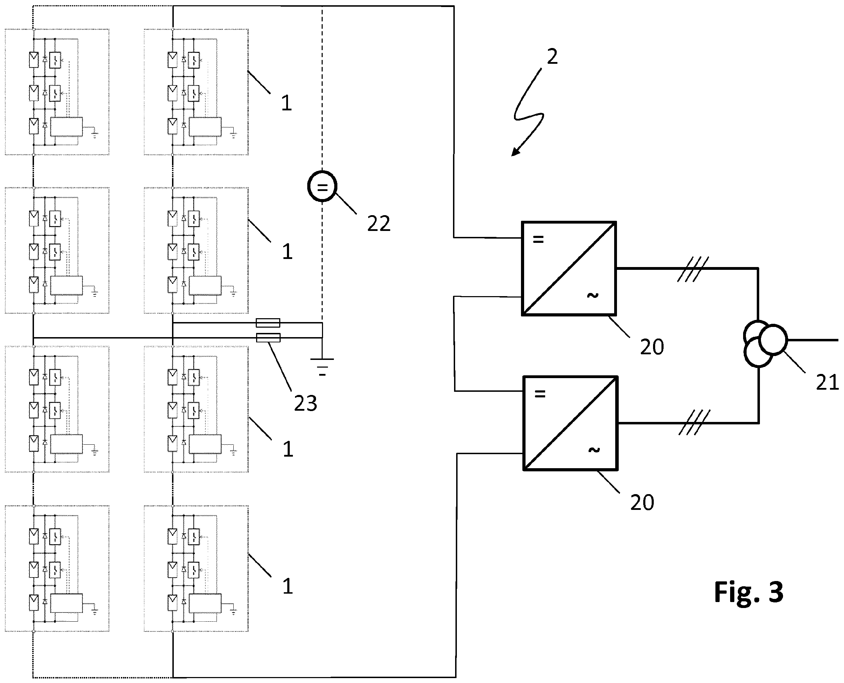

Wie in Fig. 3 gezeigt, können die vorbeschriebenen Solarmodule 1 in einer Reihenschaltung einen String einer Photovoltaikanlage 2 bilden, wobei mehrere Strings zusätzlich parallel zueinander geschaltet sein können. Bevorzugt werden die Strings jeweils an ihrem Mittelpunkt über eine Sicherung 23 oder einen Leitungsschutzschalter mit Erdpotential elektrisch verbunden oder es wird zwischen einem Stringanschluss und Erdpotential eine Spannungsquelle 22 angeordnet, deren Spannung so gewählt ist, dass sich der Mittelpunkt jedes Strings näherungsweise bei Erdpotential befindet. Im letzten Fall spricht man auch von einer virtuellen Erdung des Strings, während der erste Fall als harte Erdung bezeichnet wird.

Es ist in beiden Erdungsvarianten von Vorteil, die Verbindung zum Erdpotential auftrennbar zu gestalten, damit ein im Falle eines Erdungsfehlers über diese Verbindung fließender Strom unterbrochen werden kann. Hierzu können in der Verbindung Sicherungen oder Schutzschalter vorgesehen werden.

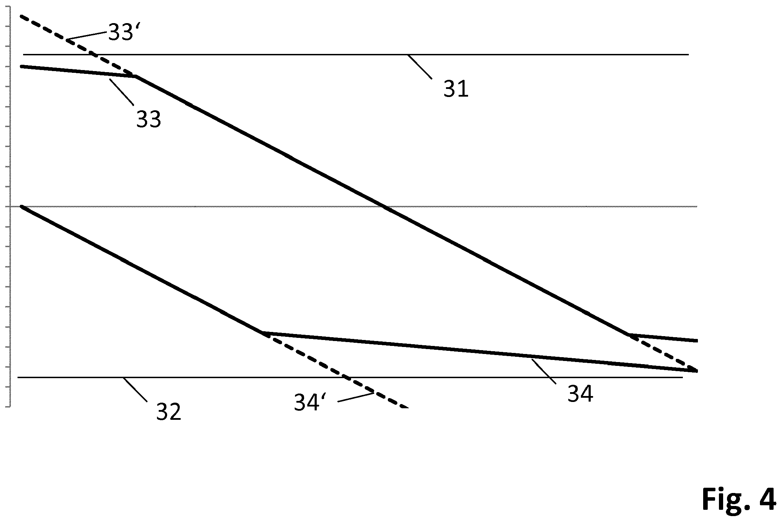

Beispiele von sich durch Verwendung erfindungsgemäßer Solarmodule ergebenden Spannungsverläufen entlang eines Strings sind in Fig. 4 dargestellt. Die Spannungen sind jeweils in Bezug auf Erdpotential dargestellt, so dass im Fall eines Strings ohne Erdungsfehler der Spannungsverlauf 33 in der Stringmitte Erdpotenzial erreicht. An beiden Stringenden ist ein Knick erkennbar, der dadurch entsteht, dass die Steuereinheiten 13 der dort angeordneten Solarmodule 1 die jeweiligen Kurzschlussschalter 12 schließen, weil die jeweiligen Spannungskriterien zum Kurzschließen erfüllt sind und in dem gezeigten Fall jedes Solarmodul nur noch eine reduzierte Restspannung aufweist. Auf diese Weise wird erreicht, dass an beiden Stringenden die obere Spannungsgrenze 31 und die untere Spannungsgrenze 32 gegenüber Erdpotential eingehalten werden, die ohne den Teilkurzschluss der betroffenen Solarmodule 1 überschritten werden, dargestellt durch den Spannungsverlauf 33'. Im Bereich des Knicks tragen nur noch die nicht kurzgeschlossenen Teilmodule 10 zur Stringspannung und damit zur Energiegewinnung bei, wobei der String aber weiterhin mit verringerter Leistung zur Energiegewinnung der Photovoltaikanlage 2 beiträgt.

Kommt es zu einem Erdungsfehler, zum Beispiel am positiven Stringende, geht der Erdpotentialbezug der Stringmitte verloren. Stattdessen befindet sich in diesem Beispiel das positive Stringende bei Erdpotential. Damit besteht die Gefahr, dass sich das negative Stringende ohne Teilkurzschluss der Solarmodule erheblich unter der unteren Spannungsgrenze befindet, was durch eine Trennung des Strings vom Wechselrichter sogar nur weiter verstärkt würde. Durch die sich im Stand der Technik ergebende starke Überspannung des Spannungsverlaufs ohne Teilkurzschluss 34' kann die Isolation der Solarmodule überlastet werden, wodurch die Solarmodule kurzfristig oder langfristig beschädigt würden, was zum Ausfall der gesamten Photovoltaikanlage führen kann. Durch die erfindungsgemäßen Solarmodule 1 ergibt sich der Spanungsverlauf 34, bei dem nunmehr bereits ab dem Bereich der Stringmitte die Solarmodule 1 ihre Spannung durch den von den jeweiligen Steuereinheiten 13 eingeleiteten Teilkurzschluss soweit reduzieren, dass auch das Stringende oberhalb der unteren Spannungsgrenze 32 verbleibt oder diesen nur geringfügig unterschreitet. Grundsätzlich kann der String sogar in dieser Situation weiter mit verringerter Leistung zur Energiegewinnung genutzt werden.

Durch die geeignete Wahl des ersten Grenzwerts für die Isolationsspannung und des zweiten Grenzwerts für die Modulspannung wird ein rechtzeitiges Kurzschließen oder Teilkurzschließen der Solarmodule entlang des Stringverlaufs erreicht, so dass das Stringende die zulässigen Spannungsgrenzen nicht oder nur geringfügig verletzt, ohne dass die Solarmodule Kenntnis über die am Stringende herrschenden Spannungsverhältnisse haben müssen. Beispielsweise kann für einen String mit 32 in Reihe geschalteten Solarmodulen 1 und einer Leerlaufspannung von 3008 Volt für den String, entsprechend einer Leerlaufspannung von 10 Volt über den ersten Teilstring 10 jedes Solarmoduls 1, mit folgenden Grenzwerten sichergestellt werden, dass der String obere und untere Spannungsgrenzen von 1500 Volt beziehungsweise -1500 Volt gegenüber Erdpotential sowohl bei extremer Sonneneinstrahlung als auch bei beliebigem Erdungsfehler einhält:
- **erster Grenzwert für die Isolationsspannung: 1250 V**
- **zweiter Grenzwert für die Modulspannung 71 V**

In einer bevorzugten Ausgestaltung der Erfindung wird der zweite Grenzwert zusätzlich zu einem vorgegebenen Festwert weiterhin in Abhängigkeit der Isolationsspannung bestimmt, insbesondere wird der zweite Grenzwert mit steigendem Wert der Isolationsspannung reduziert. Hierdurch wird erreicht, dass die Bedingung für ein Kurzschließen bereits bei einem Solarmodul erreicht wird, das näher an der Stringmitte platziert ist, wenn beispielsweise die Einstrahlung hoch und/oder die Temperatur der Solarmodule 1 niedrig ist. In diesen Fällen liegt auch die Modulspannung der Solarmodule höher, die nicht vom Kurzschluss betroffen sind, so dass ohne Anpassung des zweiten Grenzwertes das Stringende die Spannungsgrenzen verletzen würde.

Weiterhin ist es von Vorteil, die ersten und/oder zweiten Grenzwerte in Abhängigkeit der Platzierung der Solarmodule 1 innerhalb des Strings zu wählen, um die Einhaltung der Spannungsgrenzen für eine größere Menge an Betriebs- und Fehlerzuständen zu gewährleisten und/oder die Anzahl an kurzgeschlossenen Solarmodulen 1 zu minimieren.

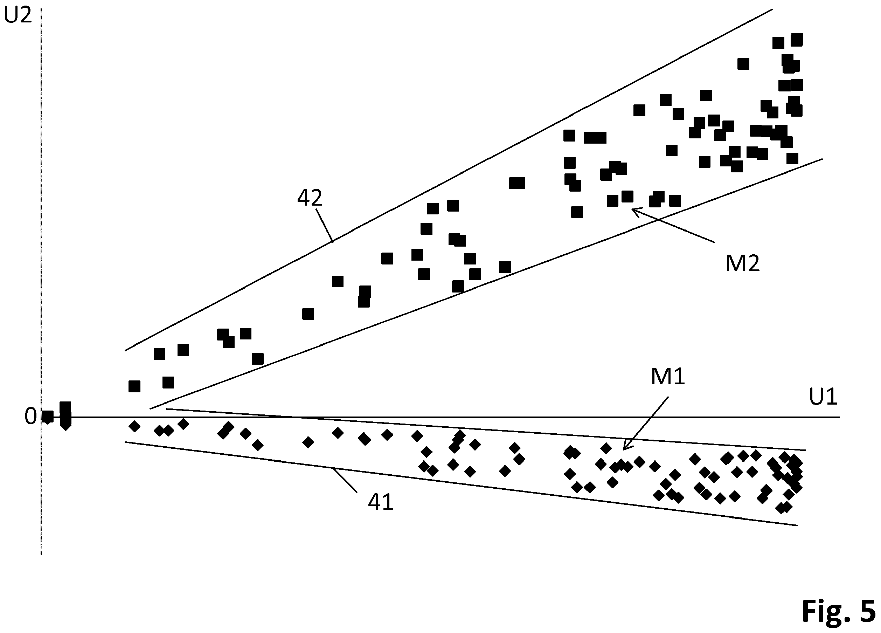

Da die individuelle Parametrierung der Steuereinheiten 13 gleichzeitig aber auch einen erhöhten Aufwand darstellt und damit die Möglichkeit einer fehlerhaften Einstellung der Grenzwerte verbunden ist, kann alternativ die individuelle Parametrierung innerhalb einer Einstellphase erfolgen, während der sichergestellt ist, dass kein Erdungsfehler in der Photovoltaikanlage 2 vorliegt, und in der eine ausreichende Bandbreite an Betriebszuständen eingenommen wird. Bevorzugt erfolgt während der Einstellphase auch kein Kurzschließen durch die Steuereinheiten 13 der Solarmodule 1. Innerhalb der Einstellphase werden jeweils Wertepaare der Modulspannung und der Isolationsspannung durch die Steuereinheiten 13 der beteiligten Solarmodule 1 erfasst und gespeichert. Auf diese Weise kann eine für die Lage des Solarmoduls 1 kennzeichnende Korrelation zwischen den Werten der Modulspannung und der Isolationsspannung bestimmt werden. Ein Beispiel der Korrelation ist für je ein Solarmodul M1 im negativen Spannungsbereich gegenüber Erdpotential in der Nähe der Stringmitte und ein Solarmodul M2 im Bereich des positiven Stringendes in Fig. 5 gezeigt. In horizontaler Richtung ist hierbei die Modulspannung U1 und in vertikaler Richtung die Isolationsspannung U2 aufgetragen. Die Wertepaare liegen jeweils entlang einer Gerade, deren Steigung für das Solarmodul M1 in der Nähe der Stringmitte einen geringeren Betrag aufweist als für das Solarmodul M2 im Bereich des Stringendes. Im gezeigten Beispiel erfolgte kein Kurzschließen der Solarmodule.

Nach Abschluss der Einstellphase können die Steuereinheiten 13 geeignete Grenzwerte für die Betätigung der Kurzschlussschalter 12 anhand der ermittelten Steigung und/oder anhand der Bereichsgrenzen 41, 42 bestimmen, in denen sich alle gespeicherten Wertepaare oder alle Wertepaare befinden, gegebenenfalls mit Ausnahme von als Ausreißer erkennbaren Wertepaaren. Diese Bereichsgrenzen 41, 42 werden von der jeweiligen Steuereinheit 13 in der Folgezeit zur Prüfung verwendet, ob ein Betätigen der Kurzschlussschalter 12 erforderlich ist, weil aktuelle Wertepaare sich außerhalb der Bereichsgrenzen befinden. Alternativ zur oberen und unteren Bereichsgrenze jedes Solarmoduls M1, M2 kann auch nur die betragsmäßig größere Bereichsgrenze zur Prüfung verwendet werden.

Die individuelle Einstellung der Bereichsgrenzen und entsprechender Grenzwerte erfolgt mit dem beschriebenen Verfahren eigenständig durch jedes der beteiligten Solarmodule 1, ohne dass ein Austausch von Werten zwischen den Solarmodulen 1 erforderlich ist. Der Einsatz von Datenkommunikation zwischen den Solarmodulen 1 oder zwischen einem Solarmodul 1 und einer weiteren Dateneinheit, insbesondere zur verbesserten Bestimmung der individuellen Grenzwerte der einzelnen Solarmodule 1, wird aber nicht ausgeschlossen und kann das Verfahren weiter verbessern. Die Datenkommunikation kann zum Beispiel über Funk oder über Power-Line-Kommunikation erfolgen.

In einer möglichen Ausführung des erfindungsgemäßen Solarmoduls 1 wird der Teilkurzschluss nach Betätigen der Kurzschlussschalter 12 aufrechterhalten, solange die elektrische Versorgung der Steuereinheit 13 aufrecht erhalten wird. Dies ist in der Regel bis zum Tagesende der Fall. In einer weiteren Ausführung wird der Teilkurzschluss aufrechterhalten, bis ein Freigabesignal durch das Solarmodul empfangen wird oder der Teilkurzschluss durch manuellen Eingriff am Solarmodul beendet wird. Auch ein Beibehalten des Kurzschlusses bis zum Vorliegen eines weiteren, aufhebenden Prüfkriteriums für die Isolationsspannung und/oder die Modulspannung oder über eine vorbestimmte Zeitdauer ist denkbar.

Alternativ kann das Kurzschließen wiederholt temporär aufgehoben werden, um festzustellen, ob die Kriterien für ein Kurzschließen noch vorliegen. In diesem Fall sollte der Zeitanteil bzw. die Zeitdauer des Aufhebens klein sein, beispielsweise 1% der Zeit bzw. weniger als 1 Sekunde lang. Im Verband vieler Solarmodule wird dann der Beitrag des einzelnen Solarmoduls zur Gesamtspannung unmaßgeblich sein, da das kurzzeitige Aufheben des Kurzschließen zwischen den Solarmodulen in zeitlich stochastischer Weise erfolgt.

### Bezugszeichenliste

- 1: Solarmodul
- 10, 11, 11': Teilmodul
- 12, 12': Kurzschlussschalter
- 13: Steuereinheit
- 14, 15: Modulanschluss
- 16: Erdpotentialbezugsanschluss
- 17: Diode
- 2: Photovoltaikanlage
- 20: Wechselrichter
- 21: Transformator
- 22: Spannungsquelle
- 23: Sicherung
- 31, 32: Spannungsgrenze
- 33, 34: Spannungsverlauf mit Teilkurzschluss
- 33', 34': Spannungsverlauf ohne Teilkurzschluss
- 41, 42: Bereichsgrenze

## Patentansprüche

1. Solarmodul (1), mit einem Kurzschlussschalter (12) und einer Steuereinheit (13), wobei der Kurzschlussschalter (12) und die Steuereinheit (13) jeweils zumindest einem Teil des Solarmoduls (1) parallel geschaltet sind, wobei das Solarmodul (1) die Steuereinheit (13) elektrisch versorgt und über einen ersten und einen zweiten Modulanschluss (14, 15) mit weiteren Solarmodulen zu einem String verbindbar ist,
**dadurch gekennzeichnet, dass**
die Steuereinheit (13) zum Betätigen des Kurzschlussschalters (12) in Abhängigkeit einer zwischen einem Erdpotentialbezugsanschluss (16) des Solarmoduls (1) und einem der Modulanschlüsse (14, 15) abfallenden Isolationsspannung eingerichtet ist.

2. Solarmodul nach Anspruch 1, wobei die die Steuereinheit (13) weiterhin zum Betätigen des Kurzschlussschalters (12) in Abhängigkeit einer über die Modulanschlüsse (14, 15) abfallenden Modulspannung eingerichtet ist.

3. Solarmodul (1) nach Anspruch 1 oder 2, wobei das Solarmodul (1) eine Reihenschaltung eines ersten Teilmoduls (10) und eines zweiten Teilmoduls (11) umfasst, wobei dem zweiten Teilmodul (11) der Kurzschlussschalter (12) und dem ersten Teilmodul (10) die Steuereinheit (13) parallel geschaltet ist.

4. Solarmodul (1) nach Anspruch 3, wobei dem ersten Teilmodul (10) ein zusätzlicher, von der Steuereinheit (13) angesteuerter Kurzschlussschalter (12) parallel geschaltet ist.

5. Solarmodul nach einem der vorangehenden Ansprüche, wobei in der Steuereinheit (13) ein erster Grenzwert hinterlegt ist, und wobei die Steuereinheit (13) zum Schließen des Kurzschlussschalters (12) eingerichtet ist, wenn die Isolationsspannung den ersten Grenzwert übersteigt.

6. Solarmodul nach Anspruch 5, wobei in der Steuereinheit (13) ein zweiter Grenzwert hinterlegt ist, und wobei die Steuereinheit (13) zum Schließen des Kurzschlussschalters (12) eingerichtet ist, wenn die Modulspannung den zweiten Grenzwert übersteigt.

7. Solarmodul nach Anspruch 6, wobei die Steuereinheit (13) zur Anpassung eines der Grenzwerte in Abhängigkeit des anderen Grenzwerts eingerichtet ist.

8. Solarmodul nach einem der vorangehenden Ansprüche, wobei die Reihenschaltung mindestens ein weiteres Teilmodul (11') aufweist, dem ein weiterer Kurzschlussschalter (12') parallel geschaltet ist, und wobei die Steuereinheit (13) zum selektiven Betätigen des weiteren Kurzschlussschalters (12') in Abhängigkeit der Isolationsspannung und der Modulspannung eingerichtet ist.

9. Photovoltaikanlage (2) umfassend eine Reihenschaltung von Solarmodulen (1) nach einem der vorangehenden Ansprüche.

10. Betriebsverfahren für ein Solarmodul (1) mit zwei Modulanschlüssen (14, 15) und einer Steuereinheit (12), wobei über die Modulanschlüsse (14, 15) das Solarmodul (1) mit weiteren Solarmodulen zu einem String verbindbar ist, und einem Erdpotentialbezugsanschluss (16), **gekennzeichnet durch** die Schritte:
- Messen einer Isolationsspannung zwischen dem Erdpotentialbezugsanschluss (16) des Solarmoduls (1) und einem der Modulanschlüsse (14, 15) mittels einer Steuereinheit (13) und
- Kurzschließen zumindest eines Teiles des Solarmoduls (1) mittels der Steuereinheit (13) in Abhängigkeit von der Isolationsspannung,
wobei die Steuereinheit (13) durch das Solarmodul (1) elektrisch versorgt wird.

11. Betriebsverfahren nach Anspruch 10, weiterhin umfassend die Schritte:
- Messen einer Modulspannung zwischen den Modulanschlüsse (14, 15) mittels der Steuereinheit (13) und
- Kurzschließen zumindest eines Teiles des Solarmoduls (1) mittels der Steuereinheit (13) in Abhängigkeit von der Modulspannung.

12. Betriebsverfahren nach Anspruch 11, wobei die Steuereinheit (13) zur Unterscheidung zwischen mindestens drei Bedingungen in Abhängigkeit der Isolationsspannung und der Modulspannung eingerichtet ist, wobei in einer ersten Bedingung kein Kurzschließen des Solarmoduls (1), in einer zweiten Bedingung das Kurzschließen eines Teils des Solarmoduls (1) und in einer dritten Bedingung das Kurzschließen des gesamten Solarmoduls (1) erfolgt.

## Claims

1. A solar module (1) comprising a short-circuit switch (12) and a control unit (13),
wherein the short-circuit switch (12) and the control unit (13) are each connected in parallel with at least one part of the solar module (1), wherein the solar module (1) supplies electrical power to the control unit (13) and is connectable via a first and a second module terminal (14, 15) to further solar modules to form a string, **characterized in that**
the control unit (13) is configured to actuate the short-circuit switch (12) depending on an insulation voltage dropped between a ground potential reference terminal (16) of the solar module (1) and one of the module terminals (14, 15).

2. The solar module as claimed in claim 1, wherein the control unit (13) is furthermore configured to actuate the short-circuit switch (12) depending on a module voltage dropped across the module terminals (14, 15).

3. The solar module (1) as claimed in claim 1 or 2, wherein the solar module (1) comprises a series connection of a first partial module (10) and a second partial module (11), wherein the short-circuit switch (12) is connected in parallel with the second partial module (11) and the control unit (13) is connected in parallel with the first partial module (10).

4. The solar module (1) as claimed in claim 3, wherein an additional short-circuit switch (12) operated by the control unit (13) is connected in parallel with the first partial module (10).

5. The solar module as claimed in any of the preceding claims, wherein a first threshold value is stored in the control unit (13), and wherein the control unit (13) is configured to close the short-circuit switch (12) when the insulation voltage exceeds the first threshold value.

6. The solar module as claimed in claim 5, wherein a second threshold value is stored in the control unit (13), and wherein the control unit (13) is configured to close the short-circuit switch (12) when the module voltage exceeds the second threshold value.

7. The solar module as claimed in claim 6, wherein the control unit (13) is configured to adjust one of the threshold values depending on the other threshold value.

8. The solar module as claimed in any of the preceding claims, wherein the series connection comprises at least one further partial module (11'), with which a further short-circuit switch (12') is connected in parallel, and wherein the control unit (13) is configured to actuate selectively the further short-circuit switch (12') depending on the insulation voltage and the module voltage.

9. A photovoltaic system (2) comprising a series connection of solar modules (1) as claimed in any of the preceding claims.

10. An operating method for a solar module (1) with two module terminals (14, 15) and a control unit (13), wherein the solar module (1) is connectable via the module terminals (14, 15) to further solar modules to form a string, and a ground potential reference terminal (16), **characterized by** the steps of:
- measuring an insulation voltage between the ground potential reference terminal (16) of the solar module (1) and one of the module terminals (14, 15) by means of a control unit (13) and
- short-circuiting at least a part of the solar module (1) by means of the control unit (13) depending on the insulation voltage,
wherein the control unit (13) is electrically powered by the solar module (1).

11. The operating method as claimed in claim 10, furthermore comprising the steps of:
- measuring a module voltage between the module terminals (14, 15) by means of the control unit (13) and
- short-circuiting at least a part of the solar module (1) by means of the control unit (13) depending on the module voltage.

12. The operating method as claimed in claim 11, wherein the control unit (13) is configured to distinguish between at least three conditions depending on the insulation voltage and the module voltage, wherein in a first condition, no short-circuiting of the solar module (1) takes place, in a second condition, the short-circuiting of a part of the solar module (1) takes place, and in a third condition, the short-circuiting of the entire solar module (1) takes place.

## Revendications

1. Module solaire (1), comportant un interrupteur de court-circuit (12) et une unité de commande (13), dans lequel l'interrupteur de court-circuit (12) est monté en parallèle dans l'unité de commande (13) avec au moins une partie du module solaire (1), dans lequel le module solaire (1) alimente électriquement l'unité de commande (13) et peut être relié par l'intermédiaire d'une première et d'une deuxième borne de module (14, 15) à d'autres modules solaires pour former une chaîne, **caractérisé en ce que** l'unité de commande (13) est conçue pour actionner l'interrupteur de court-circuit (12) en fonction d'une tension d'isolation qui chute entre une borne de référence au potentiel de terre (16) du module solaire (1) et l'une des bornes de module (14, 15).

2. Module solaire selon la revendication 1, dans lequel l'unité de commande (13) est en outre conçue pour actionner l'interrupteur de court-circuit (12) en fonction d'une tension de module qui chute par l'intermédiaire des bornes de module (14, 15).

3. Module solaire (1) selon la revendication 1 ou 2, dans lequel le module solaire (1) comprend un raccordement en série d'un premier sous-module (10) et d'un deuxième sous-module (11), dans lequel l'interrupteur de court-circuit (12) est raccordé en parallèle avec le deuxième sous-module (11) et l'unité de commande (13) est raccordée en parallèle avec le premier sous-module (10).

4. Module solaire (1) selon la revendication 3, dans lequel un interrupteur de court-circuit supplémentaire (12), commandé par l'unité de commande (13), est raccordé en parallèle avec le premier sous-module (10).

5. Module solaire selon l'une des revendications précédentes, dans lequel une première valeur limite est stockée dans l'unité de commande (13), et dans lequel l'unité de commande (13) est conçue pour fermer l'interrupteur de court-circuit (12) lorsque la tension d'isolation dépasse la première valeur limite.

6. Module solaire selon la revendication 5, dans lequel une deuxième valeur limite est stockée dans l'unité de commande (13), et dans lequel l'unité de commande (13) est conçue pour fermer l'interrupteur de court-circuit (12) lorsque la tension de module dépasse la deuxième valeur limite.

7. Module solaire selon la revendication 6, dans lequel l'unité de commande (13) est conçue pour régler l'une des valeurs limites en fonction de l'autre valeur limite.

8. Module solaire selon l'une des revendications précédentes, dans lequel le raccordement en série comporte au moins un autre sous-module (11') auquel est raccordé en parallèle un autre interrupteur de court-circuit (12'), et dans lequel l'unité de commande (13) est conçue pour actionner sélectivement l'autre interrupteur de court-circuit (12') en fonction de la tension d'isolation et de la tension de module.

9. Système photovoltaïque (2) comprenant un raccordement en série de modules solaires (1) selon l'une des revendications précédentes.

10. Procédé de fonctionnement pour un module solaire (1) comportant deux bornes de module (14, 15) et une unité de commande (13), dans lequel il est possible de raccorder le module solaire (1) par l'intermédiaire des bornes de module (14, 15) à d'autres modules solaires pour former une chaîne, et une borne de référence au potentiel de terre (16), **caractérisé par** les étapes consistant à :
- mesurer une tension d'isolation entre la borne de référence au potentiel de terre (16) du module solaire (1) et l'une des bornes de module (14, 15) au moyen d'une unité de commande (13), et
- court-circuiter au moins une partie du module solaire (1) au moyen de l'unité de commande (13) en fonction de la tension d'isolation,
dans lequel l'unité de commande (13) est alimentée électriquement par le module solaire (1).

11. Procédé de fonctionnement selon la revendication 10, comprenant en outre les étapes consistant à :
- mesurer une tension de module entre les bornes de module (14, 15) au moyen de l'unité de commande (13), et
- court-circuiter au moins une partie du module solaire (1) au moyen de l'unité de commande (13) en fonction de la tension de module.

12. Procédé de fonctionnement selon la revendication 11, dans lequel l'unité de commande (13) est conçue pour effectuer une distinction entre au moins trois conditions en fonction de la tension d'isolation et de la tension de module, dans lequel, dans une première condition, aucun court-circuit du module solaire (1) n'est réalisé, dans une deuxième condition, un court-circuit d'une partie du module solaire (1) est réalisé, et dans une troisième condition, un court-circuit du module solaire (1) dans son ensemble est réalisé.
